(19) Europäisches Patentamt / European Patent Office / Office européen des brevets

(11) **EP 2 511 729 B1**

(12) **FASCICULE DE BREVET EUROPEEN**

(45) Date de publication et mention de la délivrance du brevet:
**08.08.2018 Bulletin 2018/32**

(51) Int Cl.:
*G01S 5/02* *(2010.01)*          *G08G 5/00* *(2006.01)*
*G01S 13/78* *(2006.01)*          *G01S 13/91* *(2006.01)*

(21) Numéro de dépôt: **12163845.6**

(22) Date de dépôt: **12.04.2012**

(54) **Procédé de localisation d'aéronefs indépendant de tout système de navigation par satellite**

Lokalisierungsverfahren von Luftfahrzeugen, das von jeglichem Satellitennavigationssystem unabhängig ist

Method for locating aircraft independently from any satellite navigation system

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **14.04.2011 FR 1101163**

(43) Date de publication de la demande:
**17.10.2012 Bulletin 2012/42**

(73) Titulaire: **THALES**
**92400 Courbevoie (FR)**

(72) Inventeurs:
 • **REVOL, Marc**
   **26120 Upic (FR)**
 • **BOUNIOL, Pierre**
   **38840 Saint Hilaire du Rosier (FR)**
 • **PICCO, Christophe**
   **31036 Toulouse Cedex 1 (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
WO-A2-2011/009109      US-A- 6 094 169
US-A1- 2009 273 519

• Y.E. YANG ET AL: "Multilateration tracking and synchronization over wide areas", PROCEEDINGS OF THE 2002 IEEE RADAR CONFERENCE (IEEE CAT. NO.02CH37322), 1 janvier 2002 (2002-01-01), pages 419-424, XP055011906, DOI: 10.1109/NRC.2002.999755

## Description

La présente invention concerne un procédé de navigation pour l'aéronautique, alternatif au système de navigation par satellites de type GNSS (pour Global Navigation Satellite System selon l'acronyme anglais) civil et basé sur les infrastructures de radio-navigation existantes, permettant d'assurer une localisation ainsi qu'une navigation sécurisées pour un ensemble d'aéronefs.

La navigation sécurisée pour les trajectoires de type RNAV (pour aRea NAVigation selon l'acronyme anglais) ou RNP (pour Required Navigation Performance selon l'acronyme anglais) repose essentiellement sur la disponibilité des signaux de navigation GNSS diffusés par les constellations de satellites tels que le GPS, Galileo, ...etc. associés selon les besoins à leurs extensions régionales et locales, notamment de manière à renforcer l'intégrité des différentes phases d'approche.

L'indisponibilité temporaire d'une constellation de satellites peut immobiliser l'ensemble de la navigation aéronautique civile. La solution proposée se veut être une alternative à ce problème majeur en permettant une reconfiguration des moyens de communication et de localisation embarqués - hors moyens GNSS - afin d'établir une navigation sécurisée équivalente à la navigation GNSS, même en cas d'indisponibilité de tout signal issus d'un GNSS.

Actuellement, en l'absence de disponibilité de données de localisation issues d'un GNSS, les aéronefs de premier niveau disposent d'équipements leur permettant de calculer de façon autonome une localisation non sécurisée. Ces équipements connus équipent classiquement le parc d'aéronefs civils. Il s'agit en particulier d'équipements radio-navigation de mesure de distance au sol DME sol (pour Distance Measuring Equipment selon l'acronyme anglais) ou de systèmes de référence inertiels (IRS pour Inertial Reference System selon l'acronyme anglais).

Ces équipements embarqués, DME, IRS, permettent aux aéronefs de calculer leur localisation de premier niveau.

Des publications de référence décrivent de tels systèmes connus : US 2008/0252511: « Method for automatically selecting radionavigation beacons » et US 2010/0026567 : « Hybrid INS/GNSS system with integrity monitoring and method for integrity monitoring ».

Selon l'état de la technique, lorsque des données GNSS sont disponibles, il est également connu d'utiliser des moyens d'hybridation des données issues du GNSS avec les données de localisation issues des équipements embarqués DME / IRS pour calculer une position sécurisée des aéronefs.

Il est également connu le document US 6094169 A qui divulgue une méthode de calibration permanente de biais de balises ADS-B au sol, en mettant en oeuvre une calibration dynamique réalisée à partir d'un radar de surveillance SSR de position fixe au sol.

Le problème technique résolu par l'invention concerne donc la fourniture d'une localisation d'aéronefs, en l'absence de disponibilité de signaux GNSS.

Ainsi, l'invention a pour objet un procédé de localisation d'un ensemble d'aéronefs, ledit ensemble d'aéronefs étant équipé d'au moins un système embarqué de calcul de distance et de localisation et un dispositif d'émission et de réception de signaux ADS-B, un ensemble de balises de communication ADS-B étant déployé au sol, la position de chacune desdites balises ADS-B étant connue ; le procédé selon l'invention se caractérise par le fait qu'il comprend :

- une étape de calibration des biais de temps des balises ADS-B au moyen du calcul de l'écart de temps existant entre les balises ADS-B en réception de signaux ADS-B émis par lesdits aéronefs ;
- une étape de calcul des pseudo-distances entre ledit aéronef et lesdites balises ADS-B prenant en compte les biais de temps calibrés entre balises;
- une étape de calcul de la localisation de l'aéronef à partir desdites pseudo-distances.

Avantageusement, l'aéronef peut comprendre en outre au moins un équipement de mesure de distance (DME) pour la localisation de l'aéronef, le procédé comprenant par ailleurs une étape d'hybridation par filtre de Kalman des informations de localisation issues des mesures de pseudo-distances entre ledit aéronef et lesdites balises ADS-B au sol et des informations de localisation issues de l'équipement de mesure de distance (DME).

Avantageusement, le procédé selon l'invention peut comprendre en outre un système de référence inertiel (IRS) pour la localisation de l'aéronef comprenant une étape d'hybridation par filtre de Kalman des informations de localisation issues des mesures de pseudo-distances entre ledit aéronef et lesdites balises ADS-B au sol et des informations de localisation issues du système de référence inertiel (IRS).

Avantageusement, le procédé selon l'invention peut comprendre en outre un moyen de calcul de rayon de protection permettant d'assurer l'intégrité de la solution de localisation calculée, au moyen du calcul du maximum de séparation entre deux solutions de localisation hybrides calculées, par combinaison des mesures issues du système de référence inertiel (IRS) et du système embarqué de calcul de distance et de localisation (DME) d'une part, permettant un calcul de position filtrée, et par combinaison de mesures issues du système de référence inertiel (IRS) et des balises ADS-B d'autre part, permettant un calcul de pseudo-distances filtrées.

Avantageusement, le procédé selon l'invention peut comprendre en outre un système de référence inertiel (IRS) pour la localisation de l'aéronef ainsi qu'une une étape d'hybridation par filtre de Kalman des informations de localisation issues des mesures de pseudo-distances entre ledit aéronef et lesdites balises ADS-B déployées au sol des informations de localisation issues de l'équipement de mesure de distance (DME), et des informations de localisation issues du système de référence inertiel (IRS)

Avantageusement, ledit ensemble d'aéronefs peut comprendre des aéronefs de premier niveau visibles des balises ADS-B déployées au sol, le procédé selon l'invention s'appliquant pour chacun desdits aéronefs de premier niveau.

Avantageusement, les aéronefs de premier niveau assurent alors la fonction de balises ADS-B pour les aéronefs en complément des balises ADS-B déployées au sol.

D'autres caractéristiques et avantages de l'invention apparaîtront à l'aide de la description qui suit faite en regard du dessin annexé qui représente un schéma de principe du procédé selon l'invention.

La solution proposée consiste à établir la localisation d'un aéronef $A_k$ en utilisant les moyens standards de navigation disponibles à bord des aéronefs de premier niveau de l'aéronautique civile et les balises sol de communication existantes, à savoir en particulier les balises ADS-B (pour Automatic Dépendent Surveillance-Broadcast selon l'acronyme anglais) $\{B_i\}$, déployées au sol, et adaptées pour assurer la fonction de dispositifs de localisation par mesure de distances multi-références.

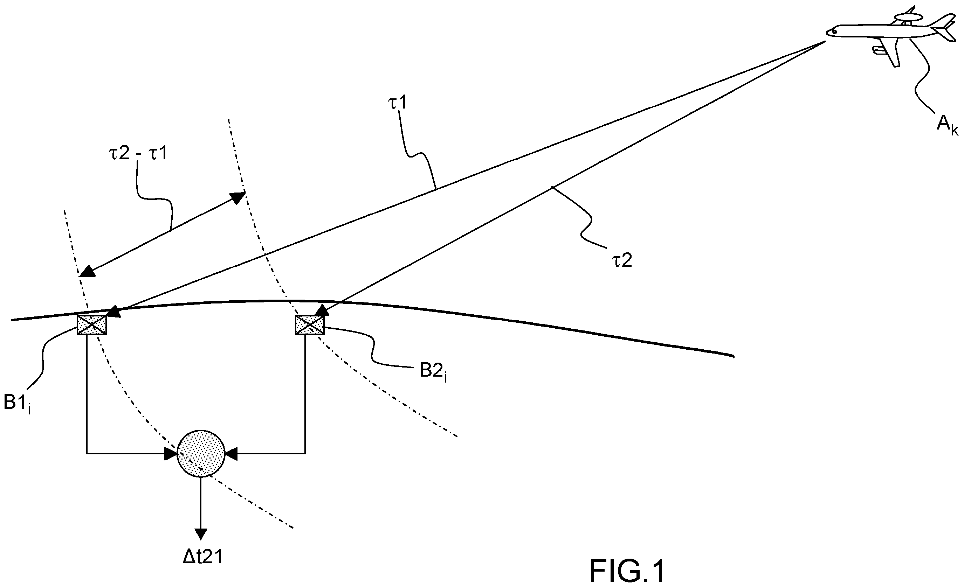

Comme représenté à la figure 1, le procédé de localisation selon l'invention consiste en un procédé embarqué de localisation de l'aéronef $A_k$ de type « snapshot », basé sur les mesures de pseudo-distances estimées sur les signaux montants émis depuis le réseau existant de balises ADS-B sol, lesdites balises étant de position connue. Aucun déploiement supplémentaire de balises n'est rendu nécessaire par la présente invention.

En premier lieu, le procédé selon l'invention comprend une étape d'estimation des biais de synchronisation des bases de temps entre balises ADS-B représentant la principale difficulté pour la mise en oeuvre d'un tel principe. Pour cela, la présente invention propose une méthode de calibration des biais de temps basée sur la compensation des mesures des écarts de temps de réception existant entre les couples $(B_{i1}, B_{i2})$ de balises ADS-B déployées au sol, par les écarts de temps théoriques de propagation calculés sur base des positions connues des balises au sol et des positions de navigation estimées des aéronefs transmises via l'ADS-B.

L'écart de temps de réception des signaux ADS-B, entre les balises $(B_{i1}, B_{i2})$ disposées au sol, et émis par chaque aéronef de premier niveau $A_k$ visible desdites balises ADS-B $(B_{i1}, B_{i2})$, s'écrit :

$$\Delta t21_{ik} = \Delta \tau 21_{ik} + b21_i$$

avec :

k est l'indice de l'aéronef $A_k$
i est l'indice du couple de balises ADSB au sol
$\Delta \tau 21_{ik}$ représente l'écart de temps de propagation théorique entre l'aéronef k et chacune des balises ADS-B $B_{i1}$, $B_{i2}$ au sol ; la distance théorique est calculée grâce à la connaissance a priori de la position des stations ADS-B au sol, et à l'information de localisation de l'aéronef $A_k$ calculée par ses moyens de navigation autonomes DME et IRS et distribuée au travers du message ADS-B de la liaison descendante.

Les biais de temps $b21_i$ existants entre les balises ADS-B $(B_{i1}, B_{i2})$ sont estimés en permanence à partir des mesures des écarts de temps $\Delta t21_{ik}$ et des positions, transmises par ADS-B, des N aéronefs de premier niveau $\{A_k\}$ passant en en visibilité :

$$\hat{b}21_i = \frac{1}{N} \cdot \sum_{k=1}^{N} (\Delta t21_{ik} - \Delta \tau 21_{ik})$$

Ces estimations moyennées sur l'ensemble des aéronefs en visibilité simultanée ou successive dans le temps permettent de bénéficier des configurations géométriques favorables à l'estimation d'écart de temps et de les cumuler selon les angles d'incidence des signaux descendants sur chacun des couples de balises.

Ce dispositif nécessite aussi que les balises ADS-B au sol soient reliées les unes aux autres, au moins deux à deux, afin de calculer les écarts entre les dates d'arrivées. L'avantage majeur par rapport à un système de mesure d'écart de temps de réception classique est que la solution ne nécessite pas de synchronisation précise des bases de temps des balises ADS-B, nécessaire à quelques nano seconde près selon l'état de la technique, qui nécessiterait une maintenance continue des moyens de calibrations des biais de propagation des signaux de temps spécifiques du réseau sol.

Ces biais $b21_i$, évoluant lentement avec le temps et la température et étant identiques d'un aéronef $A_k$ à l'autre, sont moyennés sur plusieurs minutes afin d'atteindre une précision optimale.

Les biais de temps existant entre les balises ADS-B déployées au sol étant calculés, le procédé selon l'invention prévoit, dans une deuxième étape, le calcul des pseudo-distances entre l'aéronef $A_k$ et chaque balise ADS-B déployée au sol, visible de l'aéronef $A_k$. Selon un mode de mise en oeuvre préféré de l'invention, la mesure de distance par axe à vue pour chaque balise ADS-B est faite par filtrage adapté de la séquence de code local, correspondant à un code d'identification des balises ADS-B déployées au sol, placé au début de chaque trame de 1 seconde des messages ADS-B émis. La précision de la mesure de distance dépend alors de la qualité de la fonction de corrélation découlant de ce code d'identification. Le procédé de localisation selon l'invention, exploitant les balises ADS-B déployées au sol, utilise ainsi les signaux ADS-B, transmis en continu, pour estimer les pseudo-distances entre le récepteur ADS-B embarqué dans l'aéronef $A_k$ et chacune des balises ADS-B au sol.

Dans une troisième étape, la position de l'aéronef $A_k$ est calculée classiquement, par exemple par résolution aux moindres carrés, à partir des mesures de pseudo-distance effectuées à la deuxième étape et de la matrice des axes à vues géométriques, les positions des balises ADS-B étant connues, et sous l'hypothèse que lesdites balises ADS-B sont synchronisées entre elles, ou du moins que les biais de temps ont été correctement calculés lors de la première étape du procédé et transmis aux aéronefs via le signal ADS-B montant.

Selon un second mode de réalisation, l'invention propose une méthode intégrée d'hybridation permettant le calcul conjoint de la position et, optionnellement, du rayon de protection, à partir de l'ensemble des références à disposition, issues d'un système de référence inertiel (IRS pour Inertial Reference System selon l'acronyme anglais), d'un système embarqué de calcul de distance et de localisation (DME pour Distance Measuring Equipement selon l'acronyme anglais) et du procédé selon l'invention déjà décrit exploitant les balises ADS-B disponibles.

L'un des intérêts de cette approche est de permettre la comparaison de solutions de localisation obtenues au travers de deux principes de mesures indépendants, et ainsi d'assurer l'intégrité de la solution dans un rayon de protection donné, calculé à bord de l'aéronef. En outre, l'utilisation des moyens de référence embarqués existant facilite le déploiement du procédé ainsi que sa certification.

L'hybridation par filtre de Kalman réalise un filtrage à long terme des mesures instantanées de pseudo-distances ADS-B, calculées par l'intermédiaire du procédé selon l'invention, et des mesures de déplacement et de position obtenues grâce aux autres équipements embarqués, IRS et DME. Cette hybridation s'appuie sur l'estimation de vitesse inertielle afin d'améliorer la précision des pseudo-distances filtrées et de réduire le rayon de protection éventuellement calculé. Le procédé selon l'invention peut en effet prévoir une étape de calcul du rayon de protection obtenu par estimation du maximum de séparation entre deux solutions de localisation calculées, par combinaison des mesures issues de l'IRS et du DME d'une part, permettant un calcul de position filtrée, et par combinaison de mesures issues de l'IRS et des balises ADS-B d'autre part, permettant un calcul de pseudo-distances filtrées.

Un calcul autonome du rayon de protection hybride de la position IRS+ADSB peut aussi être réalisé, de préférence selon l'approche de Breiner, par calcul du maximum de séparation entre les N solutions à N-1 axes à vue des balises ADS-B.

Selon un mode supplémentaire de réalisation, l'invention propose d'utiliser les aéronefs $A_k$ de premier niveau comme de nouvelles références de distance ADS-B, une fois que leur localisation a été sécurisée. Cette nouvelle référence de distance est alors utilisable par les aéronefs non équipés de système inertiel IRS ou d'équipement de mesure de distance DME, pour leur propre localisation. A cette fin, les avions de premier niveau sont équipés d'un canal de communication ADS-B continu, équivalent à celui des balises ADS-B déployées au sol. Ces aéronefs $A_k$ assurent alors la fonction de balises ADS-B pour des avions de deuxième niveau, en complément des balises ADS-B déployées au sol. Par application des première, deuxième et troisième étapes du procédé selon l'invention, les aéronefs de deuxième niveau calculent leur localisation à l'aide des aéronefs $A_k$ de premier niveau servant de balises ADS-B. Pour ces aéronefs de deuxième niveau, non équipés de moyens de navigation autonomes (IRS, DME), un calcul de localisation est possible à bord, même en l'absence de signaux GNSS.

En résumé, l'invention présente l'avantage de permettre à un ensemble d'aéronefs de calculer leur localisation par des moyens bord, même en cas d'indisponibilité de tout signal GNSS, et même pour des aéronefs non équipés d'équipements embarqués de mesure de distance DME ou de système inertiel IRS.

## Revendications

1. Procédé de localisation d'un ensemble d'aéronefs $(A_k)$, ledit ensemble d'aéronefs $(A_k)$ étant équipé d'au moins un système embarqué de calcul de distance et de localisation (DME, IRS) et un dispositif d'émission et de réception de signaux ADS-B, un ensemble de balises de communication ADS-B $(Bi)$ étant déployé au sol, la position de chacune desdites balises ADS-B $(Bi)$ étant connue, **caractérisé en ce qu'**il comprend :

   • une étape de calibration permanente des biais d'écart de temps $(b21_i)$ entre balises ADS-B $(B1_i, B2_i)$, estimée sur l'historique des passages en visibilité des balises desdits aéronefs $(A_k)$, au moyen du calcul de la moyenne d'écart de temps de propagation entre balises des signaux ADS-B descendants émis par les aéronefs $(A_k)$ corrigé du retard de propagation théorique, ledit retard de propagation théorique étant estimé à partir de la connaissance à priori des positions au sol des balises ADS-B et des positions dynamiques des aéronefs $(A_k)$ calculées à bord par les équipements de navigation embarqués disponibles(DME, IRS) et transmises via les messages desdits signaux ADS-B descendants ;

   • une étape de calcul des pseudo-distances entre tout aéronef en visibilité $(A_l)$ et l'ensemble desdites balises ADS-B $(B1_i, B2_i)$ prenant en compte les biais de temps calibrés entre balises, la mesure de distance sur l'axe à vue de chaque balise ADS-B est faite par filtrage adapté d'une séquence de code local, correspondant à un code d'identification des balises ADS-B déployées au sol, placé au début de chaque trame de 1 seconde des messages ADS-B émis ;
• une étape de calcul de la localisation de l'aéronef ($A_k$) à partir desdites pseudo-distances et de la matrice des axes à vues géométriques, ladite localisation étant réalisée sur la base d'une résolution au moindre carré équivalente à la résolution instantanée de la position GPS, mais par utilisation des seuls signaux de référence montants émis par les balises au sol.

2. Procédé selon la revendication 1, comprenant une étape d'hybridation par filtre de Kalman des informations de localisation issues des mesures de pseudo-distances entre ledit aéronef ($A_k$) et lesdites balises ADS-B au sol ($B1_i$, $B2_i$) et des informations de localisation issues d'un équipement de mesure de distance (DME) pour la localisation de l'aéronef ($A_k$).

3. Procédé selon la revendication 1, comprenant une étape d'hybridation par filtre de Kalman des informations de localisation issues des mesures de pseudo-distances entre ledit aéronef et lesdites balises ADS-B au sol ($B1_i$, $B2_i$) et des informations de localisation issues d'un système de référence inertiel (IRS) pour la localisation de l'aéronef ($A_k$).

4. Procédé selon les revendications 1 à 3, **caractérisé en ce qu'**il comprend en outre une étape de calcul de rayon de protection permettant d'assurer l'intégrité de la solution de localisation calculée, au moyen du calcul du maximum de séparation entre deux solutions de localisation hybrides calculées, par combinaison des mesures issues du système de référence inertiel (IRS) et du système embarqué de calcul de distance et de localisation (DME) d'une part, permettant un calcul de position filtrée, et par combinaison de mesures issues du système de référence inertiel (IRS) et des balises ADS-B ($B1_i$, $B2_i$) d'autre part, permettant un calcul de pseudo-distances filtrées.

5. Procédé selon la revendication 2, comprenant une étape d'hybridation par filtre de Kalman des informations de localisation issues des mesures de pseudo-distances entre ledit aéronef et lesdites balises ADS-B déployées au sol ($B1_i$, $B2_i$), des informations de localisation issues de l'équipement de mesure de distance (DME), et des informations de localisation issues du système de référence inertiel (IRS).

6. Procédé de localisation d'un ensemble d'aéronefs, ledit ensemble d'aéronefs comprenant des aéronefs ($A_k$) de premier niveau visibles des balises ADS-B déployées au sol, le procédé selon l'une quelconque des revendications 1 à 5 s'appliquant pour chacun desdits aéronefs ($A_l$) de premier niveau.

7. Procédé selon la revendication 6, dans lequel les aéronefs ($A_k$) de premier niveau assurent la fonction de balises ADS-B pour les aéronefs ($A_l$) en complément des balises ADS-B déployées au sol, le procédé selon l'une quelconque des revendications 1 à 5 s'appliquant pour chacun desdits aéronefs de l'ensemble d'aéronefs.

**Patentansprüche**

1. Lokalisierungsverfahren einer Gruppe von Luftfahrzeugen ($A_k$), wobei die Gruppe von Luftfahrzeugen ($A_k$) mit mindestens einem Bordsystem zur Abstandsberechnung und zur Lokalisierung (DME, IRS) und mit einer Vorrichtung zum Senden und Empfangen von ADS-B-Signalen ausgerüstet ist, wobei eine Gruppe von ADS-B-Kommunikations-Balisen (Bi) am Boden verteilt ist, wobei die Position einer jeden der Balisen ADS-B (Bi) bekannt ist, **dadurch gekennzeichnet, dass** es folgende Schritte beinhaltet:

• einen Schritt des permanenten Kalibrierens der Zeitdifferenzverzerrungen ($b21_i$) zwischen ADS-B-Balisen ($B1_i$, $B2_i$), geschätzt anhand der Historie des Sichtbarwerdens der Luftfahrzeuge für die Balisen ($A_k$), mit Hilfe einer Berechnung der mittleren Propagationszeitdifferenz zwischen Balisen der ADS-B-Downlinksignale, welche von den Luftfahrzeugen ($A_k$) gesendet werden, berichtigt um die theoretische Propagationsverzögerung, wobei die theoretische Propagationsverzögerung anhand der Vorab-Kenntnis der Boden-Positionen der ADS-B-Balisen und der dynamischen Positionen der Luftfahrzeuge ($A_k$) geschätzt wird, welche an Bord durch die verfügbaren Bord-Navigationsgeräte (DME, IRS) berechnet und über die Meldungen der ADS-B-Downlinksignale übertragen werden;
• einen Schritt des Berechnens der Pseudodistanzen zwischen jedem sichtbaren Luftfahrzeug ($A_l$) und der Gruppe der ADS-B-Balisen ($B1_i$, $B2_i$) unter Berücksichtigung der kalibrierten Zeitverzerrungen zwischen Balisen, wobei die Distanzmessung in der Sichtachse einer jeden ADS-B-Balise durch geeignete Filterung einer lokalen Code-Sequenz erfolgt, welche einem Identifizierungscode der am Boden verteilten ADS-B-Balisen entspricht, welcher zu Beginn eines jeden Sekundenrahmens der gesendeten ADS-B-Meldungen platziert ist;
• einen Schritt der Lokalisierungsberechnung des Luftfahrzeugs ($A_k$) anhand der Pseudodistanzen und der Matrix der geometrischen Sichtachsen, wobei die Lokalisierung auf der Grundlage einer Auflösung der kleinsten Quadrate erfolgt, welche der augenblicklichen Auflösung der GPS-Position entspricht, jedoch einzig unter Verwendung der von den Boden-Balisen gesendeten Uplink-Referenzsignale.

2. Verfahren nach Anspruch 1, beinhaltend einen Schritt des Hybridisierens mittels Kalman-Filter der Lokalisierungsdaten aus den Messungen der Pseudodistanzen zwischen dem Luftfahrzeug ($A_k$) und den ADS-B-Balisen am Boden ($B1_i, B2_i$) und der Lokalisierungsdaten eines Distanzmessgerätes (DME) zur Lokalisierung des Luftfahrzeugs ($A_k$).

3. Verfahren nach Anspruch 1, beinhaltend einen Schritt des Hybridisierens mittels Kalman-Filter der Lokalisierungsdaten aus den Messungen der Pseudodistanzen zwischen dem Luftfahrzeug und den ADS-B-Balisen am Boden ($B1_i, B2_i$) und der Lokalisierungsdaten eines Inertial-Referenzsystems (IRS) zur Lokalisierung des Luftfahrzeugs ($A_k$).

4. Verfahren nach den Ansprüchen 1 bis 3, **dadurch gekennzeichnet, dass** es zudem einen Schritt des Berechnens des Schutzradius beinhaltet, welcher es ermöglicht, die Integrität der berechneten Lokalisierungslösung zu gewährleisten, anhand der Berechnung des Höchsttrennwertes zwischen zwei berechneten hybriden Lokalisierungslösungen durch Kombination der Messungen des Inertial-Referenzsystems (IRS) und des Bordsystems zur Abstandsberechnung und zur Lokalisierung (DME) einerseits, welche eine Berechnung der gefilterten Position ermöglicht, und durch Kombination von Messungen des Inertial-Referenzsystems (IRS) und der ADS-B-Balisen ($B1_1, B2_1$) andererseits, welche eine Berechnung der gefilterten Pseudodistanzen ermöglicht.

5. Verfahren nach Anspruch 2, beinhaltend einen Schritt des Hybridisierens mittels Kalman-Filter der Lokalisierungsdaten aus den Messungen der Pseudodistanzen zwischen dem Luftfahrzeug und den am Boden verteilten ADS-B-Balisen ($B1_i, B2_i$), der Lokalisierungsdaten des Distanzmessgerätes (DME) und der Lokalisierungsdaten des Inertial-Referenzsystems (IRS).

6. Lokalisierungsverfahren einer Gruppe von Luftfahrzeugen, wobei die Gruppe von Luftfahrzeugen Luftfahrzeuge ($A_k$) erster Ebene beinhaltet, welche für die am Boden verteilten ADS-B-Balisen sichtbar sind, wobei das Verfahren nach einem der Ansprüche 1 bis 5 auf ein jedes der Luftfahrzeuge ($A_l$) der ersten Ebene Anwendung findet.

7. Verfahren nach Anspruch 6, bei welchem die Luftfahrzeuge ($A_k$) erster Ebene die Funktion der ADS-B-Balisen für Luftfahrzeuge ($A_l$) zusätzlich zu den am Boden verteilten ADS-B-Balisen versehen, wobei das Verfahren nach einem der Ansprüche 1 bis 5 auf jedes der Luftfahrzeuge der Gruppe von Luftfahrzeugen Anwendung findet.

**Claims**

1. Method for locating a set of aircraft ($A_k$), said set of aircraft ($A_k$) being equipped with at least one onboard system for calculating distance and location (DME, IRS) and a device for sending and receiving ADS-B signals, a set of ADS-B (Bi) communication beacons being deployed on the ground, the position of each of the said ADS-B (Bi) beacons being known, **characterized in that** it comprises:

   • a step of permanently calibrating the time discrepancy biases ($b21_i$) between ADS-B beacons ($B1_i, B2_i$), estimated over the historical log of the passages within range of the beacons of said aircraft ($A_k$), by means of the calculation of the mean discrepancy in propagation time between beacons of the downgoing ADS-B signals sent by the aircraft ($A_k$) and corrected for the theoretical propagation delay, the said theoretical propagation delay being estimated on the basis of the a priori knowledge of the ground positions of the ADS-B beacons and of the dynamic positions of the aircraft ($A_k$) calculated aboard by the available onboard equipment (DME, IRS) and transmitted via the messages of the said downgoing ADS-B signals;
   • a step of calculating pseudo-distances between any aircraft within range of the beacons ($A_l$) and the set of the said ADS-B beacons ($B1_i, B2_i$), taking into account the calibrated time biases between beacons, the distance measurement on the sighting axis of each ADS-B beacon is done by adaptive filtering of a local-code sequence, corresponding to a code for identifying the ADS-B beacons deployed on the ground and placed at the start of each 1-second frame of the ADS-B messages sent;
   • a step of calculating the location of the said aircraft ($A_k$) on the basis of the said pseudo-distances and of the matrix of the geometric sighting axes, the said location being carried out on the basis of a least-squares solution procedure equivalent to the instantaneous solution procedure for a GPS position, but by using only the upgoing reference signals sent by the ground beacons.

2. Method according to Claim 1, comprising a step of Kalman filter based hybridization of the location information arising from the measurements of pseudo-distances between the said aircraft ($A_k$) and the said ADS-B ground beacons ($B1_i, B2_i$) and from the lo-

cation information arising from a distance measuring equipment (DME) for locating the aircraft ($A_k$).

3. Method according to Claim 1, comprising a step of Kalman filter based hybridization of the location information arising from the measurements of pseudo-distances between the said aircraft and the said ADS-B ground beacons ($B1_i$, $B2_i$) and from the location information arising from an inertial reference system (IRS) for locating the aircraft ($A_k$).

4. Method according to Claims 1 to 3, **characterized in that** it furthermore comprises a protection radius calculation step making it possible to ensure the integrity of the calculated location solution, by means of the calculation of the maximum of separation between two calculated hybrid location solutions, by combining the measurements arising from the inertial reference system (IRS) and from the onboard distance and location measuring equipment (DME) on the one hand, allowing a calculation of filtered position, and by combining measurements arising from the inertial reference system (IRS) and from the ADS-B beacons ($B1_i$, $B2_i$) on the other hand, allowing a calculation of filtered pseudo-distances.

5. Method according to Claim 2, comprising a step of Kalman filter based hybridization of the location information arising from the measurements of pseudo-distances between the said aircraft and the said ADS-B beacons deployed on the ground ($B1_i$, $B2_i$), of the location information arising from the distance measurement equipment (DME) and of the location information arising from the inertial reference system (IRS).

6. Method for locating a set of aircraft, the said set of aircraft comprising first-level aircraft ($A_k$) within range of the ADS-B beacons deployed on the ground, the method according to any of claims 1 to 5 being applied for each of the said first-level aircraft ($A_l$).

7. Method according to claim 6, wherein the first-level aircraft ($A_k$) ensure the function of ADS-B for the aircraft ($A_l$) as a supplement to the ADS-B beacons deployed on the ground, the method according to any of claims 1 to 5 being applied for each of the said aircraft of the set of aircraft.

FIG.1

**EP 2 511 729 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080252511 A
- US 20100026567 A
- US 6094169 A